# EUROPÄISCHE PATENTSCHRIFT

(11) **EP 2 266 865 B1**
(45) Veröffentlichungstag und Bekanntmachung des Hinweises auf die Patenterteilung: **08.08.2018**
(21) Anmeldenummer: 10166376.3
(22) Anmeldetag: 17.06.2010
(51) Int. Cl.: B62D 21/15, B62D 25/08, B60Q 1/04

(54) **Frontendmodul mit einem über ein Abstützelement auf einem Montageträger befestigten Scheinwerfer**
Front end module with an assembly support structure on which a headlamp is mounted thanks to a supporting element
Module frontal avant comprenant une structure support pour un projecteur avant monté sur cette dernière à l'aide d'un élément de support

(30) Priorität: 18.06.2009 DE 102009029811
(43) Veröffentlichungstag der Anmeldung: 29.12.2010
(60) Teilanmeldung: 18154639.1
(73) Patentinhaber: HBPO GmbH, 59552 Lippstadt (DE)
(72) Erfinder: Brückner, Reinhold, 33442, Herzebrock (DE)
(74) Vertreter: Vogel, Andreas

(56) Entgegenhaltungen:
- DE-A1- 19 955 648
- DE-A1-102006 023 803
- DE-A1-102007 035 279
- ES-U- 1 069 925
- JP-A- 11 165 581

## Beschreibung

Die Erfindung betrifft ein Frontendmodul für ein Fahrzeug, mit einem Montageträger, der mehrere Abschnitte zur Aufnahme von Bauteilen des Fahrzeuges aufweist und an einer tragenden Struktur des Fahrzeuges befestigbar ist, mit mindestens einem Scheinwerferträger, der an dem Montageträger angeordnet ist und an dem eine Leuchteinheit befestigt ist, und mit einer Querträgereinheit für einen Stoßfänger, wobei die Querträgereinheit ein Energieabsorptionselement aufweist.

Die DE 10 2004 014 073 B4 offenbart hierzu ein Frontendmodul für Personenkraftfahrzeuge oder leichte Lastkraftfahrzeuge mit einem Montageträger, an welchem Funktionsbauteile wie Scheinwerfer und dergleichen aufgenommen sind. Ferner weist das Frontendmodul einen Stoßfänger-Querträger und Crashboxen auf, die als Energieabsorptionselemente dienen und sich bei einem starken Stoß verformen. Als Querträgereinheit wird dabei im Folgenden eine Einheit bezeichnet, die sowohl einen Stoßfänger-Querträger als auch die Energieabsorptionselemente und Flansche zur Verbindung der Querträgereinheit mit dem Montageträger und/oder einer dahinter liegenden tragenden Struktur des Fahrzeuges aufweist. Die Querträgereinheit dient als Crash-Management-System.

Üblicherweise sind die Scheinwerfer, die einen Scheinwerferträger und eine Leuchteinheit aufweisen, mit dem Scheinwerferträger an dem Montageträger befestigt. Hierzu dienen Befestigungsmittel, z. B. Schrauben, die insbesondere in etwa in Fahrzeuglängsrichtung angeordnet sind. Ragt der Scheinwerfer zu weit über den Montageträger hinaus, so ist aufgrund der ungünstigen Hebelverhältnisse eine Abstützung des Scheinwerferträgers notwendig, insbesondere um Vibrationen während einer Fahrt des Fahrzeuges zu vermeiden, aber auch um geringere Kräfte aufnehmende Befestigungsmittel und Montageträger verwenden zu können.

Zur Abstützung eignet sich insbesondere das unter dem Scheinwerferträger angeordnete Energieabsorptionselement. Beispielsweise kann der Scheinwerferträger mit dem Energieabsorptionselement verschraubt werden. Hierzu können Winkel als Abstützelement auf dem Energieabsorptionselement verschraubt oder angeschweißt sein. Dadurch kann jedoch das Energieabsorptionselement geschwächt werden, so dass das Energieabsorptionselement im Falle eines starken Stoßes weniger kinetische Energie in Verformungsenergie umwandeln kann. Das Crashverhalten des Energieabsorptionselements kann sich somit verschlechtern. Ein weiterer Nachteil liegt darin, dass zumindest bei Energieabsorptionselementen aus Aluminium eine mechanische Bearbeitung des Energieabsorptionselementes zusätzlich notwendig ist. Z.B. kann es sein, dass Löcher gebohrt oder Winkel angeschweißt werden müssen.

Im Folgenden wird die Fahrzeuglängsrichtung als x-Richtung, die Fahrzeugquerrichtung als y-Richtung und die Fahrzeughöhenrichtung als z-Richtung bezeichnet. Hierbei handelt es sich um die Raumrichtungen eines kartesischen Koordinatensystems, in dem die x, y und z-Richtung jeweils senkrecht zueinander stehen. Da der Scheinwerferträger auch mit dem Montageträger selber verbunden ist, sind bei einer zusätzlichen Verbindung zwischen dem Schweinwerferträger und dem Energieabsorptionselement Fertigungstoleranzen des Scheinwerferträgers, der Querträgereinheit und des Montageträgers zu berücksichtigen. Bei bereits festen Verbindungen zwischen dem Scheinwerferträger und dem Montageträger und zwischen der Querträgereinheit und dem Montageträger können Verbindungsstellen zwischen dem Scheinwerferträger und dem Energieabsorptionselement durch die Fertigungstoleranzen ansonsten so weit auseinander liegen, dass eine Verbindung des Scheinwerferträgers mit der Querträgereinheit nicht mehr oder nur unter mechanischen Spannungen möglich ist. Zudem wird der Scheinwerfer häufig an Teilen der Karosserie ausgerichtet, so dass auch hier ein Toleranzausgleich notwendig ist. Bevorzugt muss daher ein Toleranzausgleich in x, y- und z-Richtung bei einer Montage erfolgen. Hierzu ist bisher ein eigenständiges Toleranzausgleichselement zusätzlich zum Abstützelement vorgesehen, das ebenfalls montiert werden muss.

Die DE 102006 023 803 A1 offenbart eine Stoßfängeranordnung mit einem Scheinwerfer und einem Energieabsorptionselement für die Aufnahme von Kräften bei einem Fahrzeugaufprall. Zwischen Scheinwerfer und dem Energieabsorptionselement ist eine Vorrichtung vorgesehen, die unbeweglich am Energieabsorptionselement angeordnet ist und bei dem Aufprall sich ablösen kann.

Der vorliegenden Erfindung liegt daher die Aufgabe zu Grunde, ein montagefreundliches Frontendmodul mit einer Anordnung des Scheinwerferträgers an dem Energieabsorptionselement zu schaffen.

Zur Lösung dieser Aufgabe wird ein Frontendmodul mit sämtlichen Merkmalen des Anspruches 1 vorgeschlagen. Vorteilhafte Weiterbildungen des Frontendmoduls sind in den abhängigen Ansprüchen angegeben.

Erfindungsgemäß ist vorgesehen, dass der Scheinwerferträger über ein Abstützelement am Energieabsorptionselement angeordnet ist, wobei das Energieabsorptionselement eine Aufnahmestruktur aufweist, in der das Abstützelement geführt ist. Hierzu sind das Abstützelement und die Aufnahmestruktur formschlüssig miteinander verbunden. Die Aufnahmestruktur des Energieabsorptionselementes ist demnach als eine Führung ausgeführt, so dass das Abstützelement zumindest während einer Montage in der Führung in einer Richtung, die durch die Führung vorgegeben ist, beweglich ist. Das heißt, das Abstützelement ist zwar mit der Querträgereinheit verbunden, ein Toleranzausgleich in der durch die Führung vorgegebenen Richtung ist jedoch möglich. Das Abstützelement kann während der Montage zum Scheinwerferträger hin- und herbewegt werden. Der Scheinwerferträger kann daher in dieser Richtung spannungsfrei auch ohne ein zusätzliches Toleranzausgleichselement eingebaut werden.

Bei der Montage kann es sich um eine erste Montage des Scheinwerferträgers in das Frontendmodul handeln oder es kann sich um eine weitere Montage des Frontendmoduls in die tragende Struktur des Fahrzeuges handeln, bei der beispielsweise ein genaues Fugenmaß zwischen den Randbereichen des Scheinwerfers und daran angrenzender Teil des Kühlergrills oder des Kotflügels oder eine genaue Ausrichtung des Scheinwerfers zur Straße gefordert ist.

Die Richtung, in der der Scheinwerferträger durch die Führung beweglich ist, kann beispielsweise die Richtung sein, die der Längsrichtung des Energieabsorptionselementes entspricht. Üblicherweise bildet das Energieabsorptionselement zu der x-Richtung einen Winkel lediglich von in etwa 7 bis 10°. Daher ist vorgesehen, dass das Abstützelement durch die Führung in etwa in x-Richtung linear während der Montage verschiebbar ist. Um Spannungen durch Materialermüdungen -oder verzüge vorzubeugen, kann zudem vorteilhafterweise das Abstützelement auch nach der Montage in der Aufnahmestruktur beweglich bleiben, d.h. eine Fixierung in x-Richtung ist an der Verbindungsstelle zwischen dem Energieabsorptionselement und dem Abstützelement, das mit dem Scheinwerferträger verbunden ist, nicht vorgesehen. Der Scheinwerferträger bleibt in Richtung der Führung am Energieabsorptionselement beweglich befestigt.

Vorzugsweise soll die Abstützung mit dem Energieabsorptionselement derart verbunden sein, dass das Energieabsorptionselement nicht geschwächt ist und daher durch die Verbindung mit der Abstützung das Crashverhalten des Energieabsorptionselementes nicht negativ beeinflusst wird.

Die Aufnahmestruktur befindet sich daher erfindungsgemäß außen an dem Energieabsorptionselement, insbesondere an der Seite des Energieabsorptionselementes, die dem Scheinwerferträger zugewandt ist. Dadurch benötigt die Verbindung zwischen dem Abstützelement und dem Energieabsorptionselement keine Bohrungen. Hierdurch wird erreicht, dass sich das Crashverhalten des Energieabsorptionselementes durch die zusätzliche Funktion, die Abstützung des Scheinwerferträgers zu ermöglichen, nicht verschlechtert. Bei der Montage des Scheinwerfers in das Frontendmodul entfällt dadurch, dass keine Löcher gebohrt werden müssen, ein zusätzlicher mechanischer Arbeitsschritt. Wird das Energieabsorptionselement mit dem Stoßfänger-Querträger verschweißt, so entfallen auch für diese Verbindung Bohrungen und das Energieabsorptionselement kann dadurch vollständig bohrungsfrei ausgestaltet werden. Auch sollten Verschweißungen zur Verbindung zwischen dem Abstützelement und dem Energieabsorptionselement vermieden werden, um das Crash-Verhalten nicht zu verschlechtern und um einen zusätzlichen mechanischen Arbeitsschritt einzusparen. Erfindungsgemäß ist die Aufnahmestruktur daher einstückig mit dem Energieabsorptionselement gefertigt, d.h. die Aufnahmestruktur und das Energieabsorptionselement bilden ein monolithisches Bauteil. Die einstückige Fertigung kann z.B. in einem Strangpressverfahren erfolgen, wobei das Energieabsorptionselement mit der Aufnahmestruktur in einem Prozess gleichzeitig gefertigt werden. Die Aufnahmestruktur weist ein C-Profil auf. Die Aufnahmestruktur kann nutförmig ausgebildet sein, so dass das Abstützelement in der Aufnahmestruktur verfahren kann.

Wie oben bereits erwähnt, bleibt das Abstützelement in der Aufnahmestruktur vorzugsweise auch nach der Montage beweglich, wodurch auch das Crashverhalten im Fall eines leichten Stoßes in x-Richtung, bei der sich das Energieabsorptionselement nur wenig verformt, positiv beeinflusst wird. Das Abstützelement kann sich entlang der Aufnahmestruktur bewegen, so dass ein Verformen oder Brechen des Abstützelementes und/oder des Scheinwerferträgers und/oder des Montageträgers im Crashfall verhindert werden kann.

Das Abstützelement kann einstückig mit dem Schweinwerferträger ausgeführt sein, d.h. das Abstützelement und der Schweinwerferträger bilden ein gemeinsames, monolithisches Bauteil. Vorteilhafterweise ist das Abstützelement jedoch ein eigenständiges Bauteil, das mit dem Scheinwerferträger formschlüssig verbunden ist. Im Falle eines schweren Stoßes, bei dem sich das Energieabsorptionselement stark verformt, kann das Abstützelement an der verformten Aufnahmestruktur nicht mehr entlang gleiten und es kann zu einem Bruch des Abstützelementes führen. Hierdurch wird der Schweinwerferträger selber jedoch nicht beschädigt, so dass nur das Abstützelement als kostengünstiges Teil zusätzlich zum Energieabsorptionselement erneuert werden muss. Zusätzlich kann wie nachfolgend erläutert, durch die Ausführung des Abstützelementes als eigenständiges Bauteil ein Toleranzausgleich auch senkrecht zur Richtung der Führung ermöglicht werden.

Es ist denkbar, dass zur Verbindung des Abstützelementes mit dem Scheinwerferträger das Abstützelement eine Öffnung aufweist, durch die das Abstützelement mit dem Scheinwerferträger durch ein Befestigungselement form- und/oder kraftschlüssig verbunden ist. Vorzugsweise ist das Befestigungselement reversibel lösbar, um eine erneute Justierung des Scheinwerferträgers zum Kühlergrill oder zum Kotflügel und einen Austausch des Abstützelementes bei Bruch zu ermöglichen. Daher ist das Befestigungselement vorzugsweise eine Schraube, ein Bajonettverschluss oder dergleichen. Das Befestigungselement weist Mittel für den Form- und/oder Kraftschluss, z.B. ein Außengewinde, auf. Der Scheinwerferträger oder ein separates Gegenelement weist Gegenmittel für die Befestigung mit dem Befestigungselement auf, beispielweise ein Loch mit einem Innengewinde. Bei dem Gegenelement kann es sich um eine separate Schraubenmutter handeln.

Die Öffnung des Abstützelementes liegt vorzugsweise in einer Ebene senkrecht zu der Richtung, in der das Abstützelement auf Grund der Führung beweglich ist und in der das Befestigungselement eingeführt wird. Ist das Abstützelement in Richtung der Längsrichtung des Energieabsorptionselementes, also im Wesentlichen der x-Richtung, beweglich, so liegt die Öffnung im Wesentlichen in einer y-z-Ebene. Dadurch, dass der Winkel des Energieabsorptionselementes zur x-Achse von vorzugsweise 7 bis 10° beträgt, bildet auch die Ebene, in der die Öffnung liegt, zur y-Richtung einen Winkel mit demselben Betrag. Zur einfacheren Beschreibung sollen diese Abweichungen jedoch im Folgenden außer Acht gelassen werden, so dass im Folgenden von einer Ausrichtung des Energieabsorptionselementes in x-Richtung ausgegangen wird. Die Öffnung des Abstützelementes in y- und/oder z-Richtung kann deutlich größer als ein Loch des Scheinwerferträgers für das Befestigungselement, jedoch kleiner als ein Kopf des Befestigungselementes sein. Die Öffnung des Abstützelementes liegt dann auf Grund ihrer Größe auch im Falle von Fertigungstoleranzen mit dem Loch des Scheinwerferträgers in Deckung, so dass das Befestigungselement eingeführt werden kann. Hierdurch können Fertigungstoleranzen in y-und/oder z-Richtung ausgeglichen werden. Durch ein festes Anziehen des Befestigungselementes liegt der Kopf am Abstützelement an und fixiert das Abstützelement. Somit kann der Scheinwerferträger durch die breite Öffnung in y- und/oder z-Richtung justiert werden. Die Öffnung kann als ein Langloch in y- oder z-Richtung ausgebildet sein und dadurch nur einen Toleranzausgleich in y- oder z-Richtung ermöglichen. Vorzugsweise können nur durch die Öffnung aber gleichzeitig Toleranzen in y- und z-Richtung ausgeglichen werden. Hierzu ist die Öffnung sowohl in y- als auch in z-Richtung größer als der Schaft des Befestigungselementes und z.B. rechteckig, quadratisch oder rund ausgeformt. Durch das Vorhandensein der Aufnahmestruktur und der Öffnung und deren räumlichen Anordnung zueinander ist ein Toleranzausgleich in alle drei Raumrichtungen möglich, wobei nur ein einziges Befestigungselement, z.B. eine Schraube, nötig ist. Ein separates Toleranzausgleichselement, wie es im Stand der Technik bekannt ist, entfällt.

Um das Abstützelement formschlüssig mit der Aufnahmestruktur zu verbinden, ist es denkbar, dass das Abstützelement an seinem unteren, flanschartig angeformten Ende zwei seitliche Flanken aufweist, die in eine als C-Profil ausgeformte Aufnahmestruktur eingreifen. Dabei geht je eine Flanke mit je einer Nut des C-Profils einen Formschluss ein. Zur Montage des Abstützelementes an der Aufnahmestruktur kann das Abstützelement im einfachsten Fall seitlich in das C-Profil eingeschoben werden. Häufig fehlt hierzu jedoch der Platz.

Vorzugsweise kann das Abstützelement daher von oben durch Drehung in das C-Profil eingesetzt werden. Hierzu weisen die Flanken je eine abgerundete Ecke auf, wobei sich die abgerundeten Ecken diagonal gegenüber liegen. Das Abstützelement weist eine so geringe Länge auf, dass es von oben in das C-Profil gegenüber einer Endposition des Abstützelementes verdreht eingesetzt werden kann. Als Länge wird dabei die Ausdehnung des mit den Flanken versehenden unteren Endes des Abstützelementes in x-Richtung bezeichnet, wenn sich das Abstützelement in der Endposition befindet. Durch die abgerundeten Ecken hat sich eine die abgerundeten Ecken verbindende Diagonale des unteren Endes verringert und das Abstützelement kann in die Endposition verdreht werden.

Die Endposition ist dadurch gekennzeichnet, dass die beiden Flanken formschlüssig in dem C-Profil gehalten sind. Zwei weitere Ecken der Flanken, die sich ebenfalls diagonal gegenüberliegen können, verhindern durch ihren großen Abstand voneinander ein Weiterdrehen des Abstützelementes. Diese beiden Ecken sind bevorzugt nicht abgerundet, sondern eckig ausgeführt und befinden sich in der Nähe oder an Seitenflächen des C-Profils. Somit kann das Abstützelement in der Endposition nicht mehr verdreht, aber in Richtung der Führung verschoben werden.

Ein Zurückdrehen des Abstützelements kann durch eine Rastnase des Abstützelementes verhindert werden. Die Rastnase ist elastisch ausgeformt und insbesondere einstückig mit dem Abstützelement ausgebildet, d.h. die Rastnase und das Abstützelement bilden ein monolithisches Bauteil. Die Rastnase weist vorzugsweise dasselbe Material wie das Abstützelement, aber in geringere Dicke auf, so dass das Abstützelement mit der Rastnase in einem Fertigungsprozess hergestellt werden kann. Alternativ kann die Rastnase aus einem elastischeren Material angespritzt sein. In einem ungespannten Zustand liegt ein freies Ende der Rastnase in etwa auf Höhe der Flanken. Während des Eindrehens des Abstützelementes in die Aufnahmestruktur liegt die Rastnase zunächst oben an einer oberen Außenfläche der Aufnahmestruktur auf. Hierbei ist die Rastnase gespannt. Nach dem Eindrehen ist die Rastnase mit dem freien Ende in der Aufnahmestruktur verrastet. Die Rastnase befindet sich in der Endposition des Abstützelementes in einem in etwa ungespannten Zustand. Die Rastnase verhindert jedoch nicht ein Verschieben des Abstützelementes in der Aufnahmestruktur.

Im Weiteren wird ein bevorzugtes Ausführungsbeispiel der Erfindung anhand der beigefügten Zeichnungen und der folgenden Beschreibung aufgeführt. Das Ausführungsbeispiel ist exemplarisch dargestellt. Insbesondere sind die Abbildungen nur exemplarisch zu sehen und schließen auch Ausführungen der Erfindung mit veränderten räumlichen Maßen mit ein.

### Es zeigen:

Figur 1 eine dreidimensionale Teilansicht eines erfindungsgemäßen Frontendmoduls mit einem erfindungsgemäßen Abstützelement,
Figur 2 eine erfindungsgemäße Querträgereinheit mit dem Abstützelement während der Montage des Abstützelementes in die Querträgereinheit,
Figur 3 die erfindungsgemäße Querträgereinheit mit dem Abstützelement gemäß Figur 2 in einer Endposition,
Figur 4 eine gegenüber Fig. 1 vergrößerte, weitere Darstellung des Frontendmoduls während einer Montage eines Scheinwerferträgers an das Abstützelement und
Figur 5 eine weitere Darstellung gemäß Fig. 4 nach beendeter Montage.

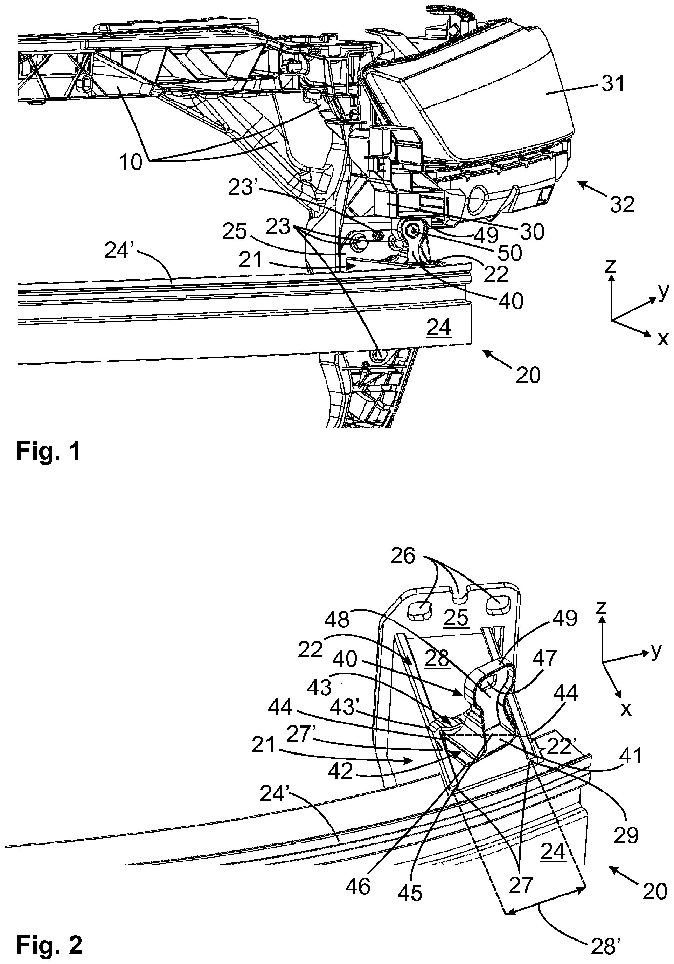

In Figur 1 ist eine Teilansicht eines Frontendmoduls für ein Fahrzeug dargestellt, wobei sich die Teilansicht des Frontendmoduls spiegelbildlich links an Figur 1 wiederholt. Das Frontendmodul weist einen Montageträger 10 auf, der an einer tragenden, nicht dargestellten Struktur des Fahrzeuges befestigt ist. Das Frontendmodul ist in Figur 1 von schräg vorne dargestellt, wobei die Blickrichtung im Wesentlichen entgegen der Fahrzeuglängsrichtung ist. In Figur 1 sowie in allen nachfolgenden Figuren ist ein kartesisches Koordinatensystem mit einer x-, y- und z-Achse zur besseren räumlichen Orientierung dargestellt. In allen Figuren sind gleiche Elemente mit gleichen Bezugszeichen bezeichnet.

Eine in Fig. 1 dargestellte Querträgereinheit 20 ist durch den Montageträger 10 ebenfalls mit der tragenden Struktur verbunden. Die Querträgereinheit 20 weist einen Stoßfänger-Querträger 24, zwei Energieabsorptionselemente 21 und zwei Flansche 25 auf, von denen je ein Energieabsorptionselement 21 und ein Flansch 25 in Figur 1 dargestellt sind. Zum Verbinden der Querträgereinheit 20 mit der tragenden Struktur sind Schrauben 23 vorgesehen, die durch den Flansch 25 der Querträgereinheit 20 ragen. Zu einer Vormontage, bei der die Querträgereinheit 20 mit dem Montageträger 10 in Abwesenheit der tragenden Struktur verbunden wird, ist eine Schraube 23' vorgesehen. Die Querträgereinheit 20 dient als Crash-Managementsystem des Fahrzeuges, wobei die Energieabsorptionselemente 21 als Crashbox dienen. Die Energieabsorptionselemente 21 können aus Stahl oder Aluminium gefertigt sein. Im Folgenden soll vereinfacht von einer Ausrichtung der Energieabsorptionselemente 21 in x-Richtung ausgegangen werden. Eine Ausrichtung der Energieabsorptionselemente 21 in einem Winkel zur x-Achse ist aber ebenfalls denkbar.

Rechts oberhalb der Querträgereinheit 20 ist in Figur 1 ein Scheinwerfer 32 dargestellt, der eine Leuchteinheit 31 und einen Scheinwerferträger 30 aufweist. Der Scheinwerferträger 30 ist durch nicht dargestellte Schrauben mit dem Montageträger 10 verschraubt. Zwischen dem Scheinwerferträger 30 und dem Energieabsorptionselement 21 ist ein erfindungsgemäßes Abstützelement 40 als eigenständiges Bauteil angeordnet. Das Abstützelement 40 ist in einer Aufnahmestruktur 22 des Energieabsorptionselementes 21 geführt. Der Scheinwerferträger 30 und das Abstützelement 40 sind durch ein Befestigungselement 50 miteinander verbunden.

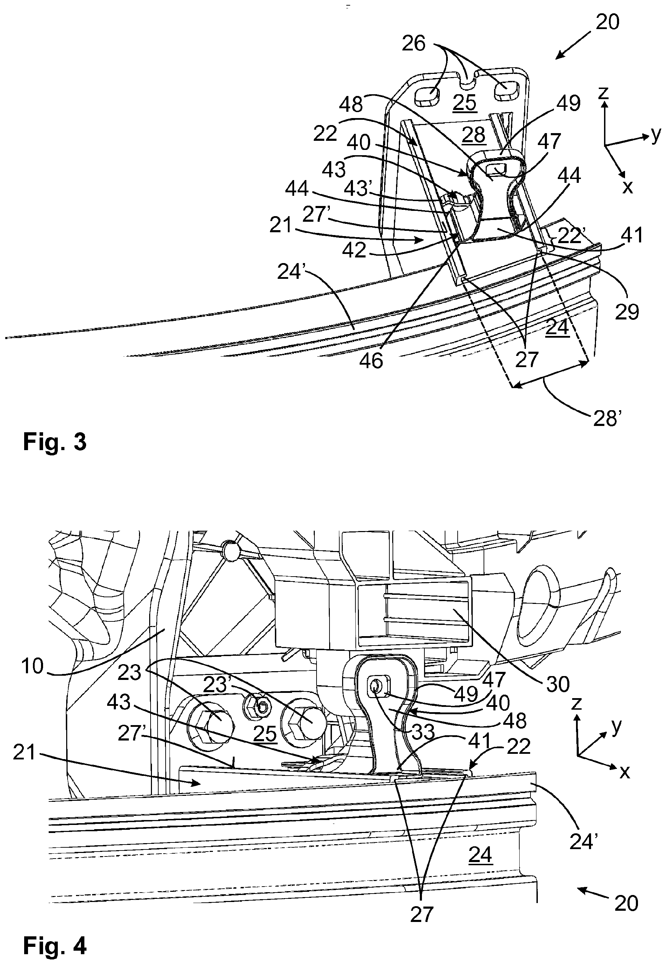

Der in den Figur 2 und 3 dargestellte Ausschnitt der Querträgereinheit 20 enthält das Energieabsorptionselement 21 mit der Aufnahmestruktur 22, die hier gut sichtbar als C-Profil ausgeformt ist. Durch eine so bohrungsfrei ausgeformte und einstückig mit dem Energieabsorptionselement 21 ausgestaltete Aufnahmestruktur 22 wird das Crashverhalten des Energieabsorptionselementes 21 nicht negativ beeinflusst. Weiterhin ist der Flansch 25 mit Ausnehmungen 26 zur Aufnahme der Schrauben 23, 23' dargestellt. Das Energieabsorptionselement 21 ist mit einem überstehendem Ende 22' der Aufnahmestruktur 22 an dem Stoßfänger-Querträger 24 verschweißt.

Während in Figur 2 das Abstützelement 40 bei einem Einbau des Abstützelementes 40 an das Energieabsorptionselement 21 der Querträgereinheit 20 dargestellt ist, ist in Figur 3 der Einbau abgeschlossen und das Abstützelement 40 hat eine Endposition erreicht, in der das Abstützelement 40 nur noch in Richtung der Aufnahmestruktur 22 beweglich ist. Bei dem Einbau wird das Abstützelement 40 in die Aufnahmestruktur 22 eingedreht, da im vorliegenden Ausführungsbeispiel zu wenig Platz zwischen dem Ende 22' und einer in z-Richtung hervorstehenden Kante 24' des Stoßfänger-Querträgers 24 vorhanden ist, um das Abstützelement 40 seitlich einzuführen. In dem Ausführungsbeispiel in Figur 2 wird das Abstützelement 40 im Uhrzeigersinn eingedreht.

Wie in Figur 3 dargestellt ist, wird ein Formschluss des Abstützelementes 40 mit der Aufnahmestruktur 22 dadurch erreicht, dass zwei Flanken 42 des Abstützelementes 40 in durch zwei seitliche Enden des C-Profils gebildete Nuten 27 eingreifen. Das Abstützelement 40 weist an seinem unteren Ende 41 in y-Richtung eine entsprechende Breite auf, die einer Breite 28' einer unteren Innenfläche 28 des C-Profils entspricht. Das Abstützelement 40 weist jedoch eine geringe Länge in x-Richtung auf, so dass das Abstützelement 40 verdreht von oben in die Aufnahmestruktur 21 eingesetzt werden kann. Hierbei wird eine elastische Rastnase 43 des Abstützelementes 40 angehoben, so dass ein freies Ende 43' der Rastnase 43 auf einer obere Außenfläche 27' einer Nut 27 zu liegen kommt. Zugleich wird die Rastnase 43 gespannt.

Jede der Flanken 42 weist ein abgerundetes Ende 44 auf, wobei sich die beiden abgerundeten Ecken 44 der beiden Flanken 42 diagonal gegenüber liegen. Hierdurch ergibt sich, dass eine Diagonale 45 zwischen den abgerundeten Ecken 44 von einem geringeren oder gleichem Ausmaß als die Breite 28' ist, so dass das Abstützelement 40 in die in Fig. 3 dargestellte Endposition verdreht werden kann. Die beiden Flanken 42 weisen jedoch auch jeweils eine nicht abgerundete eckige Ecke 46 auf, die an je einer Seitenfläche 29 der Aufnahmestruktur 21 anliegt oder nahezu anliegt. Eine weitere Diagonale zwischen den beiden eckigen Ecken 46 ist somit größer als die Breite 28' und verhindert so ein Weiterdrehen aus der Endposition des Abstützelementes 40. Während das Abstützelement 40 die Endposition erreicht, gleitet die Rastnase 43 von der oberen Außenfläche 27' der Nut 27 ab und das freie Ende 43' der Rastnase 43 fährt und rastet in die Nut 27 ein. Hierdurch werden ein Zurückdrehen und auch ein Weiterdrehen des Abstützelementes 40 wirkungsvoll verhindert. In der in Figur 3 dargestellten Endposition des Abstützelementes 40 ist nun das Abstützelement 40 nur noch in x-Richtung hin und her beweglich, während es durch die Rastnase 43 und die nicht abgerundeten Ecken 46 nicht mehr verdrehbar ist und in y- und z-Richtung durch das Eingreifen der Flanken 42 in die Nut 27 nicht mehr linear beweglich ist.

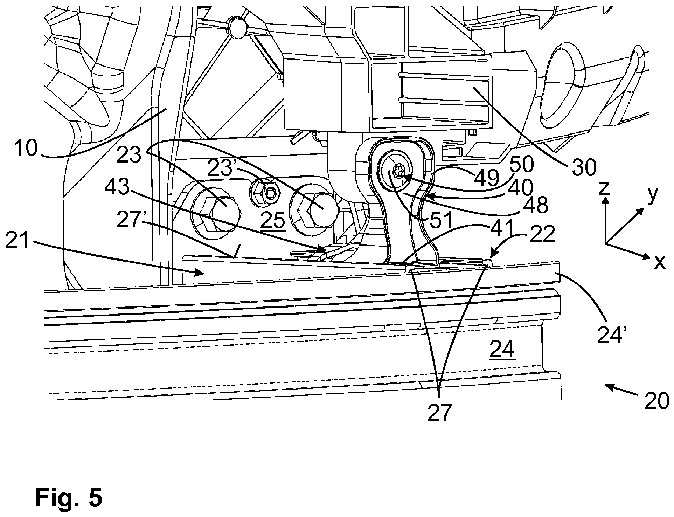

In Figur 4 und 5 ist ein Ausschnitt des Frontendmoduls während und nach der Montage des Scheinwerferträgers 30 an das Abstützelement 40 dargestellt. Hierzu ist in Figur 4 das Befestigungselement 50 zwischen dem Abstützelement 40 und dem Scheinwerferträger 30 noch nicht eingefügt, während Fig. 5 den fertig montierten Zustand zeigt. Nachdem das Abstützelement 40 die Endposition bezüglich der Querträgereinheit 20 eingenommen hat, kann das Abstützelement 40 an dem Scheinwerferträger 30 befestigt werden. Der Scheinwerferträger 30 kann bereits zuvor lose oder fest mit dem Montageträger 10 verbunden worden sein. Zunächst wird das Abstützelement 40 entlang der Aufnahmestruktur 22 bis zum Scheinwerferträger 30 bewegt, wobei ein Toleranzausgleich in x- Richtung erfolgt. Zum Befestigen des Scheinwerferträgers 30 an dem Abstützelement 40 weist der Scheinwerferträger 30 ein Loch 33 auf. Vorzugsweise sind in diesem Loch 33 Gegenmittel zum reversibel form- und/oder kraftschlüssigen Befestigen des Befestigungselementes 50 angeordnet, zum Beispiel ein Gewinde, in das das als Schraube ausgeformte Befestigungselement 50 eingedreht werden kann.

Wie in Figur 4 dargestellt ist, ist eine Öffnung 47 des Abstützelementes 40 in y- und z-Richtung größer als das Loch 33 ausgestaltet. Hierdurch ist auch ein in bezogen auf die Öffnung 47 nicht mittiges Eindrehen des Befestigungselementes 50 in das Loch 33 möglich. Hierdurch kommt es zu einem Toleranzausgleich des Scheinwerferträgers 30 gegenüber dem Abstützelement 40 in y- und z-Richtung. Wie in Figur 5 dargestellt, überragt ein Kopf 51 des Befestigungselementes 50 die Öffnung 47, so dass eine Fixierung zwischen dem Befestigungselement 50, dem Abstützelement 40 und dem Scheinwerferträger 30 durch Eindrehen des Befestigungselementes 50 erfolgt. Durch das mögliche Verschieben des Abstützelementes 40 in x-Richtung und das nicht mittige Anordnen des Befestigungselementes 50 in der Öffnung 47 erfolgt ein Toleranzausgleich in alle drei Raumrichtungen, wobei nur das Anziehen des Befestigungselementes 50 notwendig ist.

Zunächst ist es denkbar, dass das Befestigungselement 50 nur lose an dem Scheinwerferträger 30 bei einer Montage der Einzelteile des Frontendmoduls befestigt wird. Eine endgültiger Toleranzausgleich und Justierung erfolgt dann erst in einer Montage des Frontendmoduls an die tragende Struktur des Fahrzeuges, bei der der Scheinwerfer 32 erneut, beispielsweise an einem Kotflügel, ausgerichtet wird.

Das Abstützelement 40 kann aus Gründen der Gewichts- und Kostenreduktion in einem oberen Ende 48 von geringer Länge in x-Richtung ausgestaltet sein, jedoch zur Erhöhung der Stabilität eine versteifende Seitenumkantung 49, die das Abstützelement 40 an seinem oberen Ende 48 umrundet, aufweisen. Hierdurch ergibt sich ein nach vorne und/oder hinten offenes Abstützelement 40. Das Abstützelement 40 kann aus Kunststoff hergestellt sein.

### Bezugszeichenliste

- 10: Montageträger
- 20: Querträgereinheit
- 21: Energieabsorptionselement
- 22: Aufnahmestruktur
- 22': Ende von 22
- 23: Schrauben
- 23': Schraube
- 24: Stoßfänger-Querträger
- 24': Kante von 24
- 25: Flansch
- 26: Ausnehmung
- 27: Nut
- 27': obere Außenfläche von 27
- 28: Innenfläche
- 28': Breite von 28
- 29: Seitenfläche von 22
- 30: Scheinwerferträger
- 31: Leuchteinheit
- 32: Scheinwerfer
- 33: Loch
- 40: Abstützelement
- 41: unteres Ende von 40
- 42: Flanke
- 43: Rastnase
- 43': freies Ende von 43
- 44: abgerundete Ecken
- 45: Diagonale
- 46: nicht abgerundete Ecken
- 47: Öffnung
- 48: oberes Ende von 40
- 49: Seitenumkantung
- 50: Befestigungselement
- 51: Kopf von 50

## Patentansprüche

1. Frontendmodul für ein Fahrzeug, mit
einem Montageträger (10), der mehrere Abschnitte zur Aufnahme von Bauteilen des Fahrzeuges aufweist und an einer tragenden Struktur des Fahrzeuges befestigbar ist,
mindestens einem Scheinwerferträger (30), der an dem Montageträger (10) angeordnet ist und an dem eine Leuchteinheit (31) befestigt ist,
einer Querträgereinheit (20) für einen Stoßfänger, wobei die Querträgereinheit (20) ein Energieabsorptionselement (21) aufweist, wobei die Querträgereinheit (20) als Crash-Managementsystem des Fahrzeuges und das Energieabsorptionselement (21) als Crashbox dient,
wobei
der Scheinwerferträger (30) über ein Abstützelement (40) am Energieabsorptionselement (21) angeordnet ist,
**dadurch gekennzeichnet, dass**
das Energieabsorptionselement (21) eine Aufnahmestruktur (22) aufweist, in der das Abstützelement (40) geführt ist, wobei das Abstützelement (40) und die Aufnahmestruktur (22) formschlüssig miteinander verbunden sind, wobei die Aufnahmestruktur (22) des Energieabsorptionselementes (21) als eine Führung ausgeführt ist, so dass das Abstützelement (40) zumindest während der Montage in der Führung in einer Richtung, die durch die Führung vorgegeben ist, in x-Richtung beweglich ist, wobei die x-Richtung die Fahrzeuglängsrichtung ist, wobei die Aufnahmestruktur (22) sich außen an dem Energieabsorptionselement (21), an der Seite des Energieabsorptionselementes (21), die dem Scheinwerferträger (30) zugewandt ist, befindet,
wobei die Aufnahmestruktur (22) einstückig mit dem Energieabsorptionselement (21) gefertigt ist und die Aufnahmestruktur (22) ein C-Profil aufweist.

2. Frontendmodul nach Anspruch 1,
**dadurch gekennzeichnet,**
**dass** der Scheinwerferträger (30) in einer Richtung beweglich an dem Energieabsorptionselement (21) befestigt ist.

3. Frontendmodul nach Anspruch 1 oder 2,
**dadurch gekennzeichnet,**
**dass** die Verbindung zwischen dem Abstützelement (40) und dem Energieabsorptionselement (21) bohrungsfrei ausgeführt ist.

4. Frontendmodul nach einem der vorhergehenden Ansprüche,
**dadurch gekennzeichnet,**
**dass** das Abstützelement (40) ein eigenständiges Bauteil, insbesondere aus Kunststoff, ist.

5. Frontendmodul nach einem der vorhergehenden Ansprüche,
**dadurch gekennzeichnet,**
**dass** das Abstützelement (40) in Längsrichtung des Energieabsorptionselementes (21) linear in der Aufnahmestruktur (22) während einer Montage verschiebbar ist, um einen Toleranzausgleich in Längsrichtung des Energieabsorptionselementes (21) zu ermöglichen, und insbesondere auch nach der Montage in der Aufnahmestruktur (22) verschiebbar bleibt.

6. Frontendmodul nach einem der vorhergehenden Ansprüche,
**dadurch gekennzeichnet,**
**dass** das Abstützelement (40) eine Öffnung (47) aufweist, durch die das Abstützelement (40) mit dem Scheinwerferträger (30) mittels eines Befestigungselementes (50) verbunden ist.

7. Frontendmodul nach Anspruch 6,
**dadurch gekennzeichnet,**
**dass** die Öffnung (47) in einer Ebene senkrecht zur Längsrichtung des Energieabsorptionselementes (21) liegt und insbesondere so groß dimensioniert ist, dass ein Toleranzausgleich in beide kartesische Richtungen senkrecht zur Längsrichtung des Energieabsorptionselementes (21) möglich ist.

8. Frontendmodul nach einem der vorhergehenden Ansprüche,
**dadurch gekennzeichnet,**
**dass** zum Toleranzausgleich in alle kartesische Richtungen nur ein Befestigungselement (50) ausreicht, wobei das Befestigungselement (50) insbesondere eine Schraube ist.

9. Frontendmodul, nach einem der vorhergehenden Ansprüche,
**dadurch gekennzeichnet,**
**dass** die Aufnahmestruktur (22) ein nach oben geöffnetes C-Profil ist und ein unteres Ende (41) des Abstützelementes (40) seitliche Flanken (42) aufweist, durch die ein Formschluss des Abstützelementes (40) mit dem C-Profil ausgebildet ist.

10. Frontendmodul nach Anspruch 9,
**dadurch gekennzeichnet,**
**dass** das untere Ende (41) eine so geringe Länge aufweist und die seitlichen Flanken (42) je an einer Ecke (44) so abgerundet sind, wobei die abgerundeten Ecken (44) einander diagonal gegenüberliegen, dass das Abstützelement (40) von oben drehend in die Aufnahmestruktur (22) einsetzbar ist.

11. Frontendmodul nach Anspruch 9 oder 10,
**dadurch gekennzeichnet,**
**dass** zwei weitere Ecken (46) der seitlichen Flanken (42) so weit voneinander entfernt sind, wobei die Ecken (46) insbesondere an Seitenflächen (29) der Aufnahmestruktur (22) unmittelbar oder nahezu unmittelbar anliegen, dass ein Weiterdrehen nach dem Einsetzen nicht möglich ist.

12. Frontendmodul nach einem der vorhergehenden Ansprüche,
**dadurch gekennzeichnet,**
**dass** das Abstützelement (40) eine federnd ausgebildete, insbesondere mit dem Abstützelement (40) einstückige, Rastnase (43) aufweist, wobei insbesondere die Rastnase (43) während des Eindrehens sich oberhalb der Aufnahmestruktur (22) in einem gespannten Zustand befindet.

13. Frontendmodul nach Anspruch 12,
**dadurch gekennzeichnet,**
**dass** ein freies Ende (43') der Rastnase (43) nach dem Eindrehen in der Aufnahmestruktur (22) aufgenommen ist, so dass ein Zurückdrehen des Abstützelementes (40) verhindert wird.

## Claims

1. A front-end module for a vehicle, with
an assembly support (10), which has a plurality of sections for purposes of accommodating components of the vehicle, and which can be attached to a supporting structure of the vehicle,
at least one headlamp support (30), which is arranged on the assembly support (10) and to which a lighting unit (31) is attached,
a cross member unit (20) for a bumper, wherein
the cross member unit (20) has an energy absorption element (21), wherein
the cross member unit (20) serves as a crash management system of the vehicle and the energy absorption element (21) serves as a crash box, wherein
the headlamp support (30) is arranged on the energy absorption element (21) via a supporting element (40),
**characterised in that**,
the energy absorption element (21) has an accommodating structure (22) in which the supporting element (40) is guided, wherein
the supporting element (40) and the accommodating structure (22) are connected to one another in a form fit, wherein
the accommodating structure (22) of the energy absorption element (21) is designed as a guide, so that the supporting element (40), at least during assembly, can be moved in the X-direction in the guide in a direction that is predetermined by the guide, wherein
the X-direction is the vehicle longitudinal direction, wherein
the accommodating structure (22) is located on the outside of the energy absorption element (21), on the side of the energy absorption element (21) that is facing towards the headlamp support (30), wherein
the accommodating structure (22) is produced integrally with the energy absorption element (21), and the accommodating structure (22) has a C-profile.

2. The front-end module in accordance with claim 1,
**characterised in that**,
the headlamp support (30) is mounted on the energy absorption element (21) such that it can move in one direction.

3. The front-end module in accordance with claim 1 or 2,
**characterised in that**,
the connection between the supporting element (40) and the energy absorption element (21) is designed so as to be borehole-free.

4. The front-end module in accordance with one of the preceding claims,
**characterised in that**,
the supporting element (40) is an independent component, in particular one that is made of plastic.

5. The front-end module in accordance with one of the preceding claims,
**characterised in that**,
during assembly the supporting element (40) can be displaced linearly in the accommodating structure (22), in the longitudinal direction of the energy absorption element (21), so as to enable compensation for tolerances in the longitudinal direction of the energy absorption element (21), and in particular can still be displaced in the accommodating structure (22) after assembly.

6. The front-end module in accordance with one of the preceding claims,
**characterised in that**,
the supporting element (40) has an opening (47) through which the supporting element (40) is connected to the headlamp support (30) by means of a fastening element (50).

7. The front-end module in accordance with claim 6,
**characterised in that**,
the opening (47) lies in a plane perpendicular to the longitudinal direction of the energy absorption element (21), and in particular is dimensioned to be sufficiently large such that compensation for tolerances is possible in both Cartesian directions perpendicular to the longitudinal direction of the energy absorption element (21) .

8. The front-end module in accordance with one of the preceding claims,
**characterised in that**,
for purposes of compensation for tolerances in all Cartesian directions only one fastening element (50) is sufficient, wherein
the fastening element (50) is in particular a screw.

9. The front-end module in accordance with one of the preceding claims,
**characterised in that**,
the accommodating structure (22) is a C-profile that is opened upwards, and a lower end (41) of the supporting element (40) has lateral flanks (42), by means of which a form fit connection of the supporting element (40) with the C-profile is formed.

10. The front-end module in accordance with claim 9,
**characterised in that**,
the lower end (41) has a sufficiently short length and the lateral flanks (42) are sufficiently rounded off at each corner (44), wherein
the rounded corners (44) are diagonally opposed to each other such that the supporting element (40) can be inserted into the accommodating structure (22) from above in a rotating movement.

11. The front-end module in accordance with claim 9 or 10,
**characterised in that**,
two further corners (46) of the lateral flanks (42) are sufficiently far apart from each other, wherein the corners (46) in particular fit against side surfaces (29) of the accommodating structure (22) directly or almost directly, such that no further rotation after insertion is possible.

12. The front-end module in accordance with one of the preceding claims,
**characterised in that**,
the supporting element (40) has a resiliently formed latching nose (43), in particular integral with the supporting element (40), wherein
in particular, the latching nose (43) is located in a stressed state above the accommodating structure (22) during the inward rotating movement.

13. The front-end module in accordance with claim 12,
**characterised in that**,
a free end (43') of the latching nose (43) is accommodated in the accommodating structure (22) after the inward rotating movement, such that any reverse rotation of the supporting element (40) is prevented.

## Revendications

1. Module frontal pour un véhicule, comprenant
un support de montage (10) qui présente plusieurs parties destinées à recevoir des composants du véhicule et qui peut être fixé à une structure portante du véhicule,
au moins un support de projecteur (30) qui est disposé sur le support de montage (10) et sur lequel une unité d'éclairage (31) est fixée,
une unité de traverse (20) pour un pare-chocs, l'unité de traverse (20) présentant un élément d'absorption d'énergie (21), l'unité de traverse (20) servant de système de gestion de collision du véhicule et l'élément d'absorption d'énergie (21) de « crash box »,
dans lequel
le support de projecteur (30) est disposé sur l'élément d'absorption d'énergie (21) par l'intermédiaire d'un élément de soutien (40),
**caractérisé en ce que**
l'élément d'absorption d'énergie (21) présente une structure de réception (22) dans laquelle l'élément de soutien (40) est guidé, l'élément de soutien (40) et la structure de réception (22) étant reliés entre eux par complémentarité de forme, la structure de réception (22) de l'élément d'absorption d'énergie (21) étant conçue comme un guide, de sorte que l'élément de soutien (40) est mobile, au moins pendant le montage dans le guide, dans une direction x qui est prédéterminée par le guide, la direction x étant la direction longitudinale du véhicule, la structure de réception (22) se trouvant extérieurement sur l'élément d'absorption d'énergie (21), du côté de l'élément d'absorption d'énergie (21) tourné vers le support de projecteur (30),
la structure de réception (22) étant fabriquée d'une seule pièce avec l'élément d'absorption d'énergie (21) et la structure de réception (22) présentant un profil en C.

2. Module frontal selon la revendication 1,
**caractérisé en ce**
**que** le support de projecteur (30) est fixé de manière mobile dans une direction sur l'élément d'absorption d'énergie (21).

3. Module frontal selon la revendication 1 ou 2,
**caractérisé en ce**
**que** la liaison entre l'élément de soutien (40) et l'élément d'absorption d'énergie (21) est réalisée sans perçages.

4. Module frontal selon l'une des revendications précédentes,
**caractérisé en ce**
**que** l'élément de soutien (40) est un composant indépendant, en particulier en matière plastique.

5. Module frontal selon l'une des revendications précédentes,
**caractérisé en ce**
**que** l'élément de soutien (40) peut coulisser linéairement dans la structure de réception (22) dans la direction longitudinale de l'élément d'absorption d'énergie (21) pendant le montage pour permettre une compensation de tolérance dans la direction longitudinale de l'élément d'absorption d'énergie (21), et en particulier reste coulissant dans la structure de réception (22) même après le montage.

6. Module frontal selon l'une des revendications précédentes,
**caractérisé en ce**
**que** l'élément de soutien (40) présente une ouverture (47) à travers laquelle l'élément de soutien (40) est relié au support de projecteur (30) au moyen d'un élément de fixation (50).

7. Module frontal selon la revendication 6,
**caractérisé en ce**
**que** l'ouverture (47) est située dans un plan perpendiculaire à la direction longitudinale de l'élément d'absorption d'énergie (21) et en particulier dimensionnée de telle sorte qu'une compensation de tolérance dans les deux directions cartésiennes perpendiculaires à la direction longitudinale de l'élément d'absorption d'énergie (21) est possible.

8. Module frontal selon l'une des revendications précédentes,
**caractérisé en ce**
**qu'**un seul élément de fixation (50) suffit pour la compensation de tolérance dans toutes les directions cartésiennes, l'élément de fixation (50) étant en particulier une vis.

9. Module frontal, selon l'une des revendications précédentes,
**caractérisé en ce**
**que** la structure de réception (22) est un profilé en C ouvert vers le haut et une extrémité inférieure (41) de l'élément de soutien (40) présente des flancs latéraux (42) au moyen desquels une liaison par complémentarité de forme de l'élément de soutien (40) avec le profilé en C est réalisée.

10. Module frontal selon la revendication 9,
**caractérisé en ce**
**que** l'extrémité inférieure (41) présente une longueur suffisamment faible et les flancs latéraux (42) sont arrondis chacun à un coin (44), les coins arrondis (44) étant opposés l'une à l'autre en diagonale, de telle sorte que l'élément de soutien (40) peut être inséré dans la structure de réception (22) par le haut en tournant.

11. Module frontal selon la revendication 9 ou 10,
**caractérisé en ce**
**que** deux autres coins (46) des flancs latéraux (42) sont si éloignés l'un de l'autre, les coins (46) venant en particulier s'appuyer directement ou presque directement sur des surfaces latérales (29) de la structure de réception (22), qu'une rotation supplémentaire n'est pas possible après l'insertion.

12. Module frontal selon l'une des revendications précédentes,
**caractérisé en ce**
**que** l'élément de soutien (40) présente un bec d'encliquetage (43) conçu élastique, en particulier d'une seule pièce avec l'élément de soutien (40), en particulier le bec d'encliquetage (43) se trouvant dans un état tendu au-dessus de la structure de réception (22) pendant la rotation.

13. Module frontal selon la revendication 12,
**caractérisé en ce**
**qu'**une extrémité libre (43') du bec d'encliquetage (43) est reçue dans la structure de réception (22) après la rotation, de sorte qu'une rotation en arrière de l'élément de soutien (40) est empêchée.
